# EUROPÄISCHE PATENTSCHRIFT

(11) **EP 2 193 397 B1**
(45) Veröffentlichungstag und Bekanntmachung des Hinweises auf die Patenterteilung: **26.12.2018**
(21) Anmeldenummer: 05808042.5
(22) Anmeldetag: 14.11.2005
(51) Int. Cl.: G02B 13/00, G02B 13/14, G02B 27/14, H04N 7/14

(54) **OPTISCHES SYSTEM**
OPTICAL SYSTEM
SYSTÈME OPTIQUE

(30) Priorität: 16.12.2004 DE 102004060616
(43) Veröffentlichungstag der Anmeldung: 09.06.2010
(73) Patentinhaber: QUALCOMM Incorporated, San Diego, CA 92121-1714 (US)
(72) Erfinder: HERMSEN, Markus, 82194 Gröbenzell (DE); SIGG, Jakob, 85635 Höhenkirchen (DE)
(74) Vertreter: Dunlop, Hugh Christopher
(86) Internationale Anmeldenummer: PCT/EP2005/055961
(87) Internationale Veröffentlichungsnummer: WO 2006/063910

(56) Entgegenhaltungen:
- WO-A1-96/35977
- DE-A1- 19 736 675
- US-A- 5 070 407
- PATENT ABSTRACTS OF JAPAN Bd. 1998, Nr. 09, 31. Juli 1998 (1998-07-31) & JP 10 108152 A (SANYO ELECTRIC CO LTD), 24. April 1998 (1998-04-24)
- PATENT ABSTRACTS OF JAPAN Bd. 2003, Nr. 12, 5. Dezember 2003 (2003-12-05) & JP 2003 333392 A (FUJI PHOTO FILM CO LTD), 21. November 2003 (2003-11-21)
- PATENT ABSTRACTS OF JAPAN Bd. 1996, Nr. 09, 30. September 1996 (1996-09-30) & JP 08 140072 A (OLYMPUS OPTICAL CO LTD), 31. Mai 1996 (1996-05-31)

## Beschreibung

Die Erfindung betrifft ein optisches System zum Erfassen von Strahlung.

Mobile Kommunikationsgeräte, wie beispielsweise Mobiltelefone, entwickeln sich zunehmend zu Multifunktionsgeräten. So ermöglichen sie nicht nur Telefonate, Datenübertragungen, Spiele und das Abspielen von Musik, sondern zunehmend auch die Aufnahme von Bildern durch eingebaute digitale Farbkameras.

Nachteil an der Bereitstellung vieler Funktionen ist der für die einzelne Funktion benötigte Platz, insbesondere in Kombination mit der Anforderung an mechanische Stabilität, welcher der Miniaturisierung von insbesondere mobilen Kommunikationsgeraten entgegen läuft. Ein Beispiel hierfür ist der Einsatzgroßer Anzeigeeinheiten (Displays) für eine an Multimediadienste angepasste Anzeige oder zur Steuerung einer in das Kommunikationsgerät eingebauten Kamera, deren Objektiv, Steuer- und Speichereinrichtung ebenfalls Platz benötigt.

Die Patentanmeldung WO 1996/035977 bezieht sich auf eine Öffnungs- und Schließvorrichtung eines Infrarot-Filters für Kameras, wobei die Vorrichtung so konstruiert ist, dass die Menge des Infrarotstrahls die durch einen Linsenzylinder hindurchtritt um fotografische Elemente (11) zu erreichen, einstellbar ist.

Die Patentschrift US5070407 bezieht sich auf eine Videokamera, die eine Siliziumdiodenröhre oder ein ähnliches lichtempfindliches Festkörper-Aufnehmerelement als Lichtbildabtastvorrichtung verwendet, und eine Lichtsteuervorrichtung aufweist, die Licht im visuellen Spektrum detektiert und bei Empfang von visuellem Spektrallicht eine mechanische Schaltvorrichtung, die einen IR-Filter und einen optischen oder neutralen Dichtefilter vor dem Bildsensor positioniert. Zusätzlich können verschiedene Filter andere Beleuchtungslichtfrequenzen ersetzen.

Weitere relevante Dokumente sind die Patentschriften JP10108152, JP2003333392, DE19736675 und JP2008140072.

Es ist also Aufgabe der vorliegenden Erfindung, weitere Funkionalitäten in einem mobilen Kommunikationsgerät bereitzustellen, für die kein oder nur wenig zusätzlicher Platz erforderlich ist.

Diese Aufgabe wird durch den unabhängigen Anspruch gelöst. Vorteilhafte Ausgestaltungen sind Gegenstand der abhängigen Ansprüche. Es ist ein optisches System vorgesehen, das zumindest zwei Aperturen aufweist, die jeweils eine optische Achse definieren sowie einen Strahlengang zu einem Sensor. Hierbei weist die zweite Apertur eine Verschlusseinrichtung auf, welche zu ihrem im Wesentlichen lichtdichten Verschließen dient.

Mittels des Sensors kann Strahlung in einem Wellenlängenbereich erfasst werden. Im optischen System ist weiterhin eine Umlenkeinrichtung vorgesehen, welche Strahlung in Abhängigkeit von ihrer Wellenlänge umlenkt. Diese Umlenkung erfolgt derart, dass nur Strahlung aus einem Teilwellenlängenbereich des mittels des Sensors erfassbaren Wellenlängenbereichs auf den Sensor trifft.

Damit kann bewirkt werden, dass durch die erste Apertur fast ausschließlich Licht in nur einem Teil-Wellenlängenbereich auf den Sensor treffen kann. Durch die zweite Apertur kann Licht aus dem gesamten, vom Sensor erfassbaren Wellenlängenbereich auf den Sensor treffen. Dies ermöglicht eine selektive Erfassung von Strahlung, welche beispielsweise bei kombinierten Tag/Nachtsichtgeräten oder normalen Kameras/ Nachtsichtkameras Anwendung finden kann.

Die Umlenkeinrichtung kann insbesondere durch einen Strahlteiler und einen Filter zum Herausfiltern eines Unterdrückungswellenlängenbereichs gebildet werden. Der Filter ist insbesondere zwischen erster Apertur und Strahlteiler angeordnet.

Eine derartige Realisierung ist wegen der verwendbaren Standardkomponenten von Vorteil. Der Unterdrückungswellenlängenbereich ist insbesondere durch den mittels des Sensors erfassbaren Wellenlängenbereich abzüglich des Teil-Wellenlängenbereichs definiert.

Die Umlenkeinrichtung kann auch durch einen dichroitischen Strahlteiler gebildet werden. Dies hat den Vorteil, dass bei einer entsprechenden dichroitischen Beschichtung auf einen zusätzlichen Filter verzichtet werden kann. Dadurch wird ein Bauteil eingespart, was einen Kosten- und Platzvorteil darstellen kann.

Insbesondere stehen die optischen Achsen beider Aperturen aufeinander senkrecht. Dadurch lässt sich die Umlenkeinrichtung mit einfachen Mitteln realisieren.

Parallel zueinander angeordnete Achsen ermöglichen eine einfache Handhabung durch einen Benutzer bei Einbau des optischen Systems beispielsweise in eine Kamera.

In einer vorteilhaften Ausgestaltung dienen Linsensysteme zu einer Fokussierung der Strahlung. Insbesondere kann für zwei Aperturen nur ein Linsensystem verwendet werden, welches im Strahlengang beider Aperturen vor dem Sensor angeordnet ist. Dadurch lassen sich wiederum Komponenten einsparen.

Ein derartiges optisches System lässt sich insbesondere in eine Kamera einbauen. Weiterhin kann es in einem Sensormodulverwendet werden, welches noch eine Schnittstelle zum Übertragen von Daten wie beispielsweise mittels des Sensors erfasster Bildinformation aufweist.

Weitere Vorzüge der Erfindung werden anhand ausgewählter Ausführungsbeispiele dargestellt, welche in den Figuren gezeigt sind.

Es zeigen:
Figur 1 die spezifische Empfindlichkeit einer Silizium-Fotodiode gegenüber der Wellenlänge aufgetragen;
Figur 2 eine beispielhafte Ausgestaltung einer Kamera, bei der ein Infrarot-Sperrfilter zwischen einem Linsensystem und einem Sensor vorgesehen ist;
Figur 3 eine Ausgestaltung, bei der ein dichroitischer Strahlteiler zwischen einem Sensor und einem Linsensystem vorgesehen ist, sowie ein Strahlungsabsorbierender Bereich vorhanden ist;
Figur 4 eine Ausgestaltung, bei der die erste und zweite Lichteintrittsöffnung parallel zueinander angeordnet sind.
Figur 5: Ein optisches System mit nur einem Linsensystem.

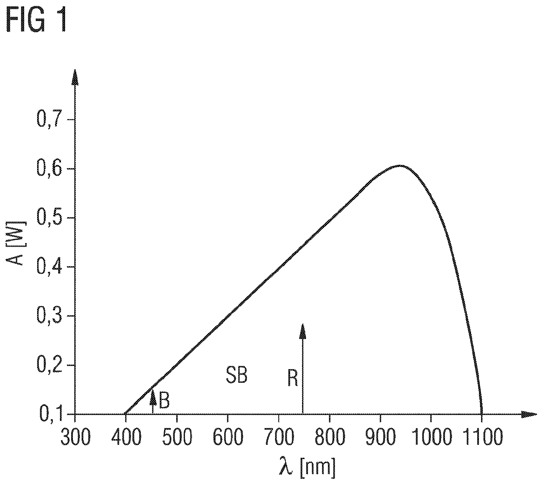

In Figur 1 ist die spezifische Empfindlichkeit einer Silizium-Fotodiode auf optische Strahlung beziehungsweise Licht im sichtbaren und Infrarotbereich gegenüber der Wellenlänge aufgetragen. Eine oder mehrere Silizium-Photodioden kann als lichtempfindlicher Sensor eingesetzt werden.

Neben Silizium-Photodioden lassen sich auch CCD-Elemente etc. als Sensoren verwenden.

Die spezifische Empfindlichkeit ist in Ampere pro Watt aufgetragen, wobei der von der Silizium-Fotodiode abgegebene Strom und die auf die Silizium-Fotodiode auftreffende Strahlungsleistung berücksichtigt wird. Die Wellenlänge ist in Nanometer angegeben. Die Silizium-Fotodiode ist in einem Wellenlängenbereich von etwa 400 Nanometer bis 1100 Nanometer lichtempfindlich. Hierbei ist die Lichtempfindlichkeit in einem großen Bereich des Infrarotbereiches von etwa 750 Nanometer bis 1100 Nanometer deutlich höher als die Lichtempfindlichkeit im sichtbaren Bereich SB zwischen etwa 400, was als blauer Farbton B wahrgenommen wird und 750 Nanometer, was als roter Farbton R wahrgenommen wird.

Die Lichtempfindlichkeit nimmt über der Wellenlänge für Silizium stetig zu, bis ein Maximum im Bereich von etwa 900 bis 1000 Nanometer erreicht wird.

Auf Grund der geringeren Lichtempfindlichkeit im sichtbaren Wellenlängenbereich werden für digitale Farbkameras mit Silizium-Photodioden oder CCD-Elementen als Sensoren Filter vor den lichtempfindlichen Sensor gesetzt, welcher den infraroten Spektralanteil stark unterdrückt oder im Idealfall vollkommen absorbiert. Ohne dieses Filter würde die Farbinformation im sichtbaren Bereich sehr stark von der spektralen Zusammensetzung des Umgebungslichtes abhängen, so dass keine brauchbare Farbinformation gewonnen werden kann
Im Normalfall wären falschfarbene Bilder die Regel. Lediglich bei einem Spektralverhalten das exakt dem entspricht bei dem das Modul parametrisiert wurde wäre eine halbwegs korrekte Farbdarstellung möglich.

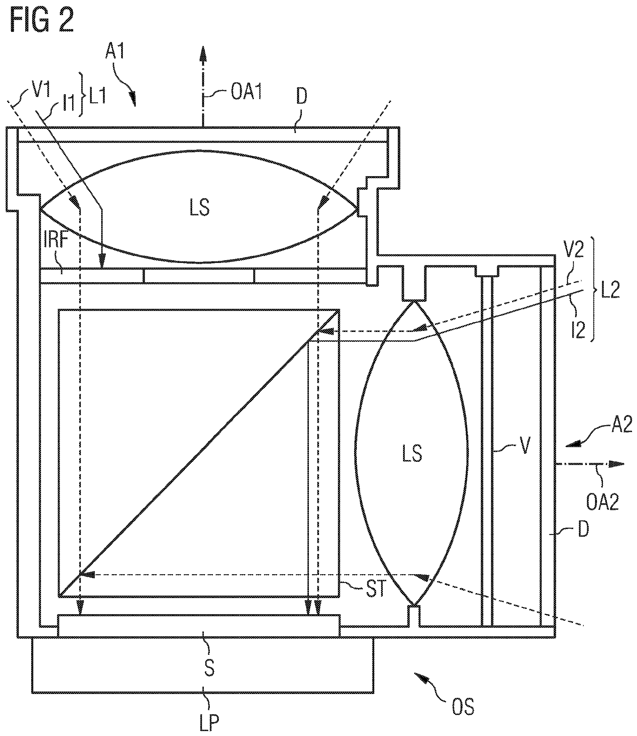

In Figur 2 ist ein optisches System OS mit einem als Silizium-Fotodiode oder CCD-Element ausgebildeten Sensor S dargestellt. Der Sensor S weist also eine Lichtempfindlichkeit im sichtbaren Bereich, sowie eine im Vergleich dazu höhere Lichtempfindlichkeit im infraroten Bereich auf. Der Sensor S ist auf einer Leiterplatte LP aufgebracht, welche die für den Sensor S erforderliche Auslese- und Steuerelektronik bereitstellt. Auf den Sensor S kann Strahlung treffen, indem sie entweder durch die erste Apertur A1 oder die zweite Apertur A2 eintritt. Die Aperturen definieren also jeweils einen Strahlengang, also ersten und zweiten Strahlengang, zum Sensor S.

Die Aperturen sind jeweils mit einem Deckglas D versehen, welches zum Schutz der darunter liegenden Elemente dient. Unter dem jeweiligen Deckglas D befindet sich ein Linsensystem LS, welches zur Bündelung der durch die jeweilige Apertur, also erste Apertur A1 oder zweite Apertur A2, eintretenden Lichtstrahlen dient.

Zum Herausfiltern von Infrarotstrahlung dient ein Infrarot-sperrfilter IRF, welches zwischen dem Linsensystem LS im ersten Strahlengang und einem Strahlteiler ST angeordnet ist. Der Strahlteiler dient dazu, die Strahlung, welche durch die erste Apertur A1 oder die zweite Apertur A2 eintritt, auf den Sensor S zu lenken.

Dies sei anhand einiger Strahlen erläutert. Zur Verdeutlichung ist ein Strahl L1 in einen sichtbaren Strahl V1 mit einem Beitrag an sichtbarem Licht und einem Infrarotstrahl I1 mit dem Beitrag an infraroter Strahlung aufgespaltet. Der Infrarotstrahl I1 wird durch das Infrarotsperrfilter IRF abgeblockt, so dass er nicht auf den Sensor S treffen kann, wo er als Störsignal, die Farbinformation im Bereich sichtbarer Strahlung verschlechtern würde. Der sichtbare Strahl V1 tritt durch das Infrarotsperrfilter IRF durch den Strahlteiler ST hindurch und trifft auf den Sensor S. Durch die erste Apertur A1 trifft also nur Strahlung im sichtbaren Wellenlängenbereich SB auf den Sensor S.

Das Infrarotsperrfilter IRF weist hierzu einen Durchlasskoeffizienten von nahe 1 für Strahlung im sichtbaren Bereich SB, und einen Durchlasskoeffizienten nahe 0 für den Infrarotbereich auf.

In Figur 2 wird also die Umlenkeinrichtung zum wellenlängenabhängigen Umlenken von Lichtstrahlen durch den Strahlteiler ST und den Infrarot-Sperrfilter IRF realisiert.

Die Situation an der zweiten Apertur A2 sei anhand eines zweiten Lichtstrahls L2 dargestellt, der wiederum in einen sichtbaren Lichtstrahl V2 und einen zweiten Infrarot-Lichtstrahl I2 aufgespaltet dargestellt ist. Sowohl der zweite sichtbare Strahl V2, als auch der zweite Infrarotstrahl I2 treten ungehindert ein, werden durch den Strahlteiler ST umgelenkt und treffen somit auf den Sensor S.

Bei Tageslicht wird die zweite Apertur A2 durch einen Verschluss V möglichst lichtdicht verschlossen gehalten, so dass nur durch die Apertur A1 eintretende Strahlung durch den Sensor S erfasst wird. Damit können bei Tageslicht durch Auslesen des Sensors S mittels einer geeigneten Elektronik, welche sich auf der Leiterplatt LP befindet, durch den unterdrückten Infrarotanteil qualitativ zufrieden stellende Bilder erzeugt werden.

Bei Dunkelheit wird nun der Verschluss V geöffnet. Damit tritt durch die erste Apertur A1 sichtbare Strahlung ein, durch die zweite Apertur A2 sichtbare Strahlung und Infrarotstrahlung. Da bei Dunkelheit der Anteil sichtbarer Strahlung von A1 und A2 sehr gering ist, trifft im Wesentlichen Infrarot-Strahlung von A2 auf den Sensor S, wodurch auch bei Dunkelheit Infrarot-Abbildungen der Umgebung erzeugt werden können. Daher ist auch ein Verschluß der A1 Apertur nicht zwingend notwendig.

Bei der Verwendung des in Figur 2 gezeigten optischen Systems in einer Kamera, lässt sich somit mit einfachen Mitteln eine Nachtsichtkamera herstellen. Dazu ist insbesondere keine zweite Abbildungsoptik, keine komplexe Mechanik, sowie kein zweiter Sensor erforderlich. Dies stellt geringe Produktionskosten sicher. Weiterhin benötigt die in Figur 2 dargestellte Ausführung keine beweglichen optischen Komponenten zum Ein- und Ausschwenken eines Infrarotsperrfilters IRF. Bewegliche optische Komponenten würden eine präzise und robuste Mechanik erfordern, da die Positionierung des Filters unter unterschiedlichsten Umgebungsbedingungen zuverlässig sein müsste, dass im Betrieb als normale Farbkamera, das heißt, bei der Funktionsweise bei Tageslicht, keine infrarote Strahlung an dem Infrarotsperrfilter IRF vorbei, auf den Sensor S, also beispielsweise Silizium-Fotodioden, treffen kann. Dies ist insbesondere dadurch auch aufwendig, da das ganze Kameramodul hermetisch dicht sein muss, um eine Degradation der Kamerafunktion durch Eindringen von Staub oder Feuchtigkeit zu vermeiden. Weiterhin müsste die Mechanik auch dahingehend ausgelegt sein, dass sie entsprechend stabil ist, so dass beim Einbau des optischen Systems in ein Mobiltelefon als Kommunikationsgerät Normstürze von 1,5 Meter auf einen Steinfußboden ohne Schaden überstanden werden. Eine derartige präzise und stabile Mechanik wäre, abgesehen vom Realisationsaufwand, der insbesondere in miniaturisierten mobilen Geräten, wie etwa Kameras in Mobiltelefonen, schwer möglich ist, zu hohen Kosten führen.

Das Öffnen des Verschlusses V kann manuell durch den Benutzer eines Kommunikationsgeräts erfolgen, in das das optische System eingebaut ist. Alternativ oder zusätzlich kann eine automatische Steuerung in Abhängigkeit von der Umgebungshelligkeit vorgesehen sein.

Auch kann mit dem Verschluß gekoppelt eine aktive Lichtquelle geschaltet werden, die bei absoluter Dunkelheit -also auch fehlender IR Strahlung- eine gute Funktionalität sicherstellt. Dies kann z.B. durch eine Infarot LED wie sie in Fernsteuerungen oder IRDA Sende oder/und Empfangseinheiten bzw. Transceivern Verwendung findet, realisiert werden.

In Figur 2 sind die erste optische Achse OA1, welche durch die erste Apertur A1 definiert wird, und die zweite optische Achse OA2, welche durch die zweite Apertur A2 definiert wird, senkrecht zueinander. Bei der Verwendung des optischen Systems in Figur 2 in einer Kamera, welche insbesondere in ein mobiles Kommunikationsgerät eingebaut ist, wird deshalb das Kommunikationsgerät beim Betrieb bei Tageslicht oder Dunkelheit ebenfalls um 90° gedreht.

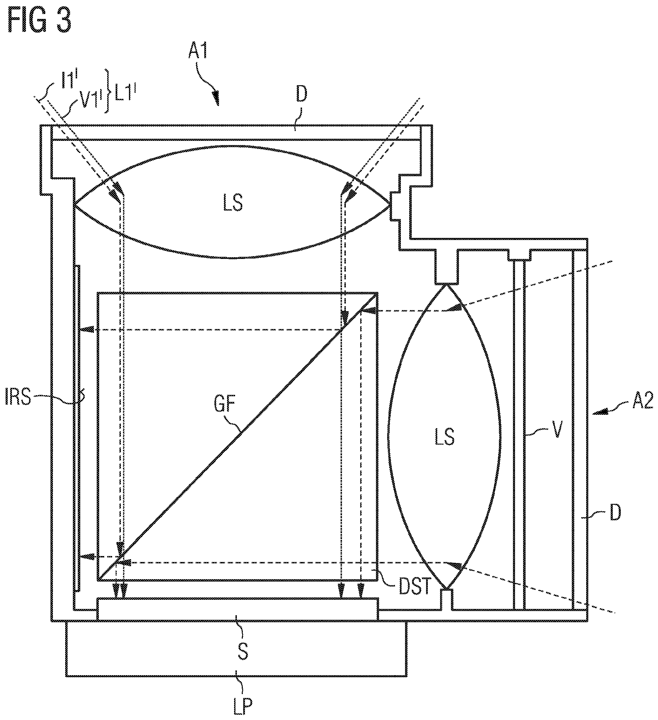

In Figur 3 ist eine weitere Ausführungsform gezeigt, bei der die Umlenkeinrichtung mittels eines dichroitischen Strahlteilers realisiert wird. Gleiche Bezugszeichen verweisen auf gleiche Objekte.

Auch in Figur 3 stehen erste optische Achse OA1 und zweite optische Achse OA2 senkrecht aufeinander.

Der dichroitische Strahlteiler DST dient zur wellenlängenabhängigen Ablenkung von Strahlung. Dies sei wiederum anhand ausgewählter Lichtstrahlen erläutert. Der Lichtstrahl L1' ist wiederum in einem sichtbaren Strahl V1' und einen Infrarotstrahl I1' aufgespaltet dargestellt, um die Wege der jeweiligen Strahlen zu erläutern. Der sichtbare Strahl V1' tritt durch den dichroitischen Strahlteiler DST hindurch und trifft auf den Sensor S.

Der in Figur 3 gezahlte dichroitische Strahlteiler DST zeichnet sich also dadurch aus, dass Strahlung im sichtbaren Wellenlängenbereich einen sehr hohen Transmissionskoeffizienten durch den dichroitischen Strahlteiler DST, welcher in der Nähe von 1 liegt, aufweist. Die Situation ist anders für Strahlung im infraroten Bereich. Der Infrarotstrahl I1' tritt ebenfalls durch die erste Apertur A1 ein. Auf dem Weg durch den dichroitischen Strahlteiler DST wird er an dessen Grenzfläche GS reflektiert. Der in Figur 3 gezeigte dichroitische Strahlteiler zeichnet sich also weiterhin dadurch aus, dass Strahlung im infraroten Bereich einen sehr hohen Reflexionskoeffizienten, welcher nahe bei 1 liegt, aufweist. Durch eine zu vernachlässigende Absorption im dichroitischen Strahlteiler DST kann sichergestellt werden, dass keine ungewünschten Verluste auftreten.

Der abgelenkte Infrarotstrahl I1' trifft auf eine strahlungsabsorbierende Schicht IRS. Diese dient dazu, dass sich keine Streustrahlung im in Figur 3 gezeigten optischen System befindet. Die insbesondere Infrarot absorbierende Schichte kann beispielsweise durch schwarzen Samt oder mattschwarze Lackierung gebildet sein.

Somit weist die in Figur 3 gezeigte Ausführung den Vorteil auf, dass kein separates Infrarot-Sperrfilter IRF, wie in Figur 2 benötigt wird, da diese Funktion durch eine entsprechende dichroitische Beschichtung eines Strahlteilers, wodurch ein dichroitischer Strahlteiler DST gebildet wird, übernommen wird. Dadurch lässt sich eine Komponente einsparen, wodurch der Platzbedarf verringert wird und eventuell auch Kosten verringert werden können.

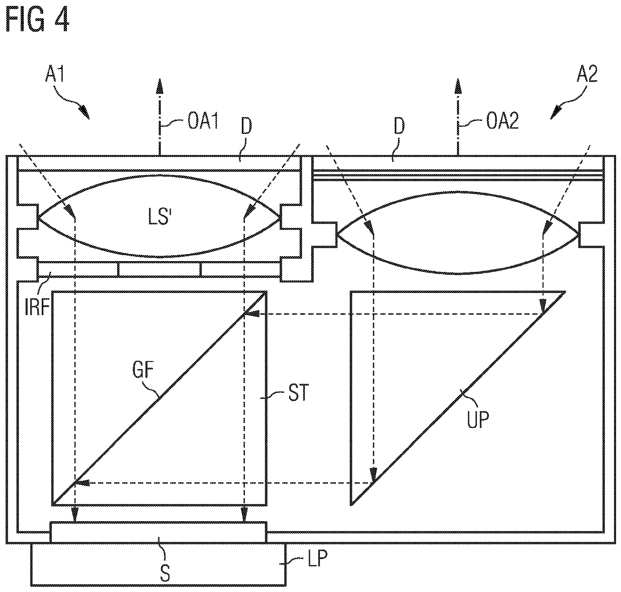

In Figur 4 ist eine weitere Ausführungsform dargestellt, bei der die erste optische Achse OA1 der ersten Apertur A1 parallel zur zweiten optischen Achse OA2 der zweiten Apertur A2 angeordnet ist.

Durch die parallele Anordnung von erster optischer Achse OA1 und zweiter optischer Achse OA2 kann das Drehen eines Kommunikationsgeräts, in dem eine Kamera mit einem in Figur 4 gezeigten optischen System eingebaut ist, vermieden werden, da eben die optischen Achsen gleich ausgerichtet sind. Dies erhöht die Benutzerfreundlichkeit beim Einbau des optischen Systems in ein Kommunikationsgerät.

Um diese gleiche Ausrichtung zu ermöglichen, ist in der in Figur 4 gezeigten Ausgestaltung weiterhin ein Umlenkprisma vorgesehen, welches Strahlung, die durch die zweite Apertur A2 eintritt, über den Strahlteiler ST auf den Sensor S lenkt.

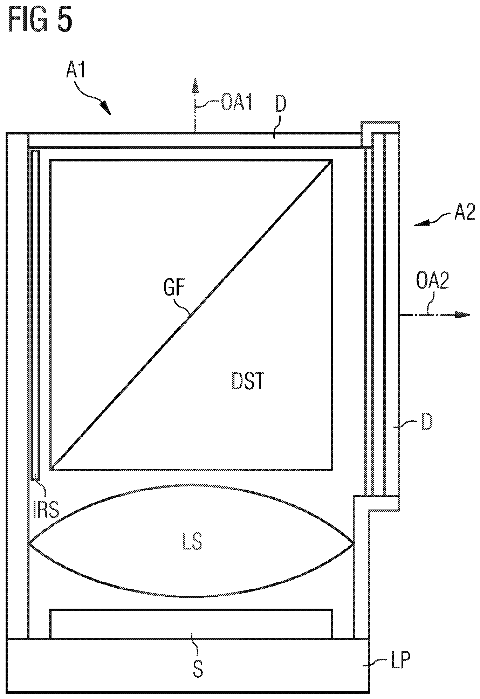

In Figur 5 ist weiterhin eine Ausführungsform dargestellt, bei der nur ein Linsensystem LS erforderlich ist, in dem das Linsensystem LS zwischen Strahlteiler ST und Sensor S angeordnet ist. Durch eine entsprechende Bemessung der Größe des dichroitischen Strahlteilers DST und der Größe der ersten Apertur A1 und der zweiten Apertur A2, sowie dem Abstand zwischen dem Deckglas D und dem dichroitischen Strahlteiler DST, kann auf ein zusätzliches, focussierendes Linsensystem LS zwischen Deckglas D und dichroitischen Strahlteiler DST verzichtet werden.

Die Verwendung nur eines Linsensystems führt durch die Einsparung einer Komponente zu geringeren Kosten und einem geringeren Platzbedarf.

Die Merkmale der in den einzelnen Figuren dargestellten Ausführungsformen können selbstverständlich miteinander kombiniert werden, so dass zum Beispiel die in Figur 5 gezeigte Ausführungsform auch mit einem herkömmlichen Strahlteiler ST und einem Infrarot-Sperrfilter IRF umgesetzt werden kann, ebenso wie die in Figur 4 gezeigte Ausführungsform mit einem dichroitischen Strahlteiler und ohne Infrarot-Sperrfilter IRF, etc.

Weiterhin ist es auch vorgesehen, ein Linsensystem sowohl a-perturseitig, wie in Fig. 3 dargestellt als auch sensorseitig, wie in Fig. 5 dargestellt vorzusehen. Dies hat den Vorteil, durch entsprechend kleinere Linsensystem den Platz optimal auszunutzen oder auch eine sehr gut anpassbare Fokussierung zu realisieren. Das oder die aperturseitigen Linsensysteme lassen sich auch in das jeweilige Deckglas integrieren. Insbesondere fungieren gewölbte Deckgläser als Linsen.

Weiterhin kann ein oder mehrere Linsensysteme in den Strahlteiler integriert werden.
Dies wird insbesondere durch entsprechend gewölbte Oberflächen des Strahlteilers realisiert. Damit lassen sich wiederum Bauteile einsparen.

Bei Verwendung eines optischen Systems gemäß einer der Ausführungsformen in einer Kamera, kann das Öffnen des Verschlusses V - wie bereits dargelegt - durch bewusste Auswahl des Benutzers manuell erfolgen oder automatisch, falls ein festgelegter Intensitätsschwellwert der Umgebungsstrahlung unterschritten wird. Dieser Schwellwert kann wiederum durch eine Kontrolleinheit in der Kamera festgelegt werden.

Weiterhin ist bei der Verwendung in einer Kamera der Einbau einer infraroten Lichtquelle vorgesehen. Die infrarote Lichtquelle kann beispielsweise durch eine LED (Light Emitting Diode) die Ausleuchtung des Blickfeldes der Kamera bei Dunkelheit deutlich steigern. Dadurch ist es möglich, sogar absolut dunkle Räume im nahen Infrarotbereich gut auszuleuchten und mit Hilfe der im Kommunikationsgerät eingebauten Kamera auf dem Display sichtbar zu machen. Das Ein- und Ausschalten der infraroten Lichtquelle kann wiederum manuell oder von einer Automatik gesteuert werden.

Ein optisches System wie beschrieben lässt sich, wie bereits dargelegt, in eine Kamera einbauen. Weiterhin kann es Anwendung in einem Nachtsichtgerät finden. Kamera oder Nachtsichtgerät können wiederum in einem mobilen Kommunikationsgerät, wie etwa einem Mobiltelefon, einem PDA (Personal Digital Assistent), einem tragbaren Computer etc., eingebaut sein.
Im Rahmen der Beispiele wurde eine Lichtempfindlichkeit im sichtbaren Bereich SB und Infrarotbereich betrachtet. Durch die Verwendung eines entsprechenden optischen Sensors lassen sich auch andere Wellenlängenbereiche betrachten.

### Bezugszeichenliste

- A1: erste Apertur
- A2: zweite Apertur
- OA1: erste optische Achse
- OA2: zweite optische Achse
- D: Deckglas
- GS: Grenzfläche
- DST: dichroitischer Strahlteiler
- IRS: Infrarot absorbierende Schicht
- LF: Linsensystem
- S: Sensor
- LP: Leiterplatte
- V1,V1',V2: sichtbare Lichtstrahlen
- I1,I1',I2: Infrarot-Lichtstrahlen
- ST: Strahlteiler
- IRS: Infrarot-Sperrfilter
- GF: Grenzfläche

## Patentansprüche

1. Optisches System (OS) zum Erfassen von Strahlung aus einem selektierbaren Teil-Wellenlängenbereich mit
a. einem Sensor (S) zum Detektieren von Strahlung in einem Wellenlängenbereich, in welchem der Teil- Wellenlängenbereich enthalten ist;
b. einer ersten Apertur (A1), welche einen ersten Strahlengang zu dem Sensor (S) sowie eine erste optische Achse (OA1) definiert;
c. und einer zweiten Apertur (A2), welche einen zweiten Strahlengang zu dem Sensor (S) sowie eine zweite optische Achse (OA2) definiert;
d. einer Umlenkeinrichtung (IRF, ST, DST) zum in Abhängigkeit von der Wellenlänge selektiven Umlenken von durch die erste Apertur (A1) eintretender Strahlung, wobei die Umlenkeinrichtung (IRF, ST, DST) durch einen dichroitischen Strahlteiler (DST) gebildet ist und nur Strahlung aus dem Teil- Wellenlängenbereich auf den Sensor treffen lässt;
e. einer Verschlusseinrichtung (V) zum lichtdichten Verschließen der zweiten Apertur (A2) derart, dass entweder nur durch die erste Apertur (A1) oder durch die ersten und zweiten Aperturen (A1, A2) eintretende Strahlung auf den Sensor trifft.

2. Optisches System (OS) nach Anspruch 1, bei dem die Umlenkeinrichtung (IRF, ST, DST) durch einen Strahlteiler (ST) und einen Filter (IRF) zum Herausfiltern von Strahlung eines Unterdrückungswellenlängebereichs gebildet ist.

3. Optisches System (OS) nach Anspruch 1 oder 2, bei dem weiterhin ein Absorptionselement (IRS) zum Absorbieren von nicht auf den Sensor treffender, durch die Aperturen (A1, A2) eingetretener Strahlung vorgesehen ist.

4. Optisches System (OS) nach einem der vorhergehenden Ansprüche, bei dem die erste Apertur (A1) eine erste optische Achse (OA1) festlegt und die zweite Apertur (A2) eine zweite optische Achse (OA2) und die optischen Achsen (OA1, OA2) aufeinander senkrecht stehen.

5. Optisches System (OS) nach einem der vorhergehenden Ansprüche 1 bis 3, bei dem die erste Apertur (A1) eine erste optische Achse (OA1) festlegt und die zweite Apertur (A2) eine zweite optische Achse (OA2) bei dem die optischen Achsen (OA1, OA2) parallel zueinander sind und ein weiteres Umlenkelement (UP) vorgesehen ist.

6. Optisches System (OS) nach einem der vorhergehenden Ansprüche, bei dem für erste Apertur (A1) und zweite Apertur (A2) jeweils ein Linsensystem (LS) vorgesehen ist.

7. Optisches System (OS) nach einem der vorhergehenden Ansprüche 1 bis 5, bei dem ein Linsensystem (LS) zwischen Umlenkeinrichtung (DST, ST, IRF) und Sensor (S) vorgesehen ist, durch welches durch die erste Apertur (A1) eintretende Strahlung und durch die zweite Apertur (A2) eintretende Strahlung hindurchtritt.

8. Kamera mit einem optischen System gemäß einem der Ansprüche 1 bis 7 und weiterhin einer Speichereinheit zum Abspeichern der von Sensor erfassten Strahlungsinformation, einer Steuereinrichtung zum Steuern des Auslesens des Sensors (S) und der Verschlusseinrichtung (V) .

9. Sensormodul mit einem optischen System gemäß einem der Ansprüche 1 bis 7 und einer Schnittstelle zur Weiterleitung von mittels des optischen Systems erfasster Bildinformation an externe Speicher- und Steuerungskomponenten.

10. Mobiles Gerät, mit einem optischen System gemäß einem der Ansprüche 1 bis 7 oder einer Kamera gemäß Anspruch 8 oder einem Sensormodul gemäß Anspruch 9.

11. Mobiles Gerät nach Anspruch 10, wobei das mobile Gerät ein Mobiltelefon ist.

## Claims

1. Optical system (OS) for sensing radiation from a selectable sub-wavelength range, comprising
a. a sensor (S) for detecting radiation in a wavelength range containing the sub-wavelength range;
b. a first aperture (A1) which defines a first beam path to the sensor (S) and a first optical axis (OA1);
c. and a second aperture (A2) which defines a second beam path to the sensor (S) and a second optical axis (OA2);
d. a deflecting device (IRF, ST, DST) for selectively deflecting, in dependence upon the wavelength, radiation entering through the first aperture (A1), wherein the deflecting device (IRF, ST, DST) is formed by a dichroic beam splitter (DST) and only radiation from the sub-wavelength range can impinge upon the sensor;
e. a closing device (V) for closing the second aperture (A2) in a lightproof manner such that either radiation entering only through the first aperture (A1) or radiation entering through the first and second apertures (A1, A2) impinges upon the sensor.

2. Optical system (OS) as claimed in claim 1, wherein the deflecting device (IRF, ST, DST) is formed by a beam splitter (ST) and a filter (IRF) for filtering out radiation of a suppression wavelength range.

3. Optical system (OS) as claimed in claim 1 or 2, wherein furthermore an absorption element (IRS) is provided for absorbing radiation entering through the apertures (A1, A2) and not impinging upon the sensor.

4. Optical system (OS) as claimed in any one of the preceding claims, wherein the first aperture (A1) determines a first optical axis (OA1) and the second aperture (A2) determines a second optical axis (OA2) and the optical axes (OA1, OA2) are perpendicular to each other.

5. Optical system (OS) as claimed in any one of the preceding claims 1 to 3, wherein the first aperture (A1) determines a first optical axis (OA1) and the second aperture (A2) determines a second optical axis (OA2), wherein the optical axes (OA1, OA2) are parallel to each other and a further deflecting element (UP) is provided.

6. Optical system (OS) as claimed in any one of the preceding claims, wherein a lens system (LS) is provided in each case for the first aperture (A1) and the second aperture (A2).

7. Optical system (OS) as claimed in any one of the preceding claims 1 to 5, wherein a lens system (LS) is provided between the deflecting device (DST, ST, IRF) and sensor (S), through which passes radiation entering through the first aperture (A1) and radiation entering through the second aperture (A2).

8. Camera having an optical system as claimed in any one of claims 1 to 7, and further having a storage unit for storing the radiation information sensed by the sensor, a control device for controlling the reading-out from the sensor (S) and the closing device (V).

9. Sensor module having an optical system as claimed in any one of claims 1 to 7 and an interface for forwarding image information sensed by means of the optical system to external storage and control components.

10. Mobile device having an optical system as claimed in any one of claims 1 to 7 or a camera as claimed in claim 8 or a sensor module as claimed in claim 9.

11. Mobile device as claimed in claim 10, wherein the mobile device is a mobile telephone.

## Revendications

1. Un système optique (OS) destiné à la détection d'un rayonnement provenant d'une gamme de sous-longueurs d'onde sélectionnable, comprenant
a. un capteur (S) destiné à la détection d'un rayonnement dans une gamme de longueurs d'onde contenant la gamme de sous-longueurs d'onde,
b. une première ouverture (A1) qui définit un premier trajet de faisceau vers le capteur (S) et un premier axe optique (OA1),
c. et une deuxième ouverture (A2) qui définit un deuxième trajet de faisceau vers le capteur (S) et un deuxième axe optique (OA2),
d. un dispositif de déflexion (IRF, ST, DST) destiné à la déflexion sélective, en fonction de la longueur d'onde, d'un rayonnement entrant par la première ouverture (A1), où le dispositif de déflexion (IRF, ST, DST) est formé par un séparateur de faisceau dichroïque (DST) et uniquement un rayonnement provenant de la gamme de sous-longueurs d'onde peut frapper le capteur,
e. un dispositif de fermeture (V) destiné à la fermeture de la deuxième ouverture (A2) de manière opaque de sorte que soit un rayonnement entrant uniquement par la première ouverture (A1) ou un rayonnement entrant par les première et deuxième ouvertures (A1, A2) frappe le capteur.

2. Le système optique (OS) selon la Revendication 1, où le dispositif de déflexion (IRF, ST, DST) est formé par un séparateur de faisceau (ST) et un filtre (IRF) destiné à l'élimination par filtrage d'un rayonnement d'une gamme de longueurs d'onde de suppression.

3. Le système optique (OS) selon la Revendication 1 ou 2, où en outre un élément d'absorption (IRS) est fourni destiné à l'absorption d'un rayonnement entrant par les ouvertures (A1, A2) et ne frappant pas le capteur.

4. Le système optique (OS) selon l'une quelconque des Revendications précédentes, où la première ouverture (A1) détermine un premier axe optique (OA1) et la deuxième ouverture (A2) détermine un deuxième axe optique (OA2) et les axes optiques (OA1, OA2) sont perpendiculaires l'un par rapport à l'autre.

5. Le système optique (OS) selon l'une quelconque des Revendications précédentes 1 à 3, où la première ouverture (A1) détermine un premier axe optique (OA1) et la deuxième ouverture (A2) détermine un deuxième axe optique (OA2), où les axes optiques (OA1, OA2) sont parallèles l'un par rapport à l'autre et un autre élément de déflexion (UP) est fourni.

6. Le système optique (OS) selon l'une quelconque des Revendications précédentes, où un système de lentilles (LS) est fourni dans chaque cas pour la première ouverture (A1) et la deuxième ouverture (A2).

7. Le système optique (OS) selon l'une quelconque des Revendications précédentes 1 à 5, où un système de lentilles (LS) est fourni entre le dispositif de déflexion (DST, ST, IRF) et le capteur (S), au travers duquel passe un rayonnement entrant par la première ouverture (A1) et un rayonnement entrant par la deuxième ouverture (A2).

8. Une caméra possédant un système optique selon l'une quelconque des Revendications 1 à 7, et possédant en outre une unité à mémoire destinée à la conservation en mémoire des informations de rayonnement détectées par le capteur, un dispositif de commande destiné à la commande de la lecture à partir du capteur (S) et le dispositif de fermeture (V).

9. Un module capteur possédant un système optique selon l'une quelconque des Revendications 1 à 7 et une interface destinée au transfert d'informations d'image détectées au moyen du système optique vers des composants de commande et à mémoire externes.

10. Un dispositif mobile possédant un système optique selon l'une quelconque des Revendications 1 à 7 ou une caméra selon la Revendication 8 ou un module capteur selon la Revendication 9.

11. Le dispositif mobile selon la Revendication 10, où le dispositif mobile est un téléphone mobile.
